# EUROPEAN PATENT APPLICATION

(11) **EP 3 900 541 A1**
(43) Date of publication of application: **27.10.2021**
(21) Application number: 20383118.5
(22) Date of filing: 17.12.2020
(51) Int. Cl.: A22C 25/00

(54) **METHOD FOR PROCESSING FISH**

(71) Applicant: Conservas Rianxeira, S.A.U., 15938 Boiro (ES)
(72) Inventor:
(74) Representative: Isern Patentes y Marcas S.L.

(57) **Abstract**

The method comprises a step of cooking the fillets of fish between 1 and 10 kg, preferably between 1.5 and 5 kg, once the fish have previously been subjected to the steps of: deheading; removal of tail and dorsal fins; removal of viscera; filleting; removal of backbone; and removal of the skin. The fish is preferably tuna. The fish is preferably frozen, for which reason an initial step of thawing the fish is included. Additionally, the dark meat can also be removed from the fish before the cooking. The method implies savings in labour, time and energy, as well as a more environmentally friendly treatment of the fish.

## Description

### Field of the invention

The present invention can be included within the technological sector of food science and technology, in particular, fish processing. In particular, the object of the invention relates to a method for processing fish.

### Background of the invention

Currently, the manner in which small frozen tuna is processed is as follows:
Starting from frozen tunas, and keeping the tunas at a temperature which does not exceed -9 °C, they are sorted according to size on metal racks, with a capacity of 600 kg per rack.

Subsequently, the tunas are subjected to a cooking step by immersion in water at an approximate temperature of 97 °C, for a cooking time of 3 - 5 hours. At the end of the cooking step, the temperature of the tunas, in the centre of the bone, is between 60-65 °C, with approximately 69 % moisture.

The fish is then cooled to a temperature of approximately 30 °C, which enables the fish to be handled for a subsequent cleaning step.

The cleaning step comprises: removal of the head, removal of skin and removal of bones, dark meat, viscera and backbone, so that the fillets are what remain as a result of the cleaning.

Finally, each of the available portions: head, skin, bones, viscera, backbone and fillets, are considered individually for their corresponding valuation.

### Summarised description of the invention

The present invention describes a method for processing fish, characterised in that it envisages a cooking step which is applied to the tuna fillets resulting from having previously subjected the tunas to at least the prior steps of: deheading; removal of tail and dorsal fins; removal of viscera; filleting; removal of backbone and removal of the skin. The indicated steps can occur in the indicated order or in another alternative order.

The use of the method of the invention has advantages with respect to the method explained in the background, which are explained below.
- Saving time and energy in the cooking, which occurs not only because the amount of tuna cooked is smaller, but also because the portions of the tuna which have been removed prior to cooking require a greater amount of energy and time to cook than the tuna fillets. There is an approximate energy saving of 50 %, which significantly affects both the process described and also results in greater care for the environment.
- Ease of valuation, since the removed portions are not cooked, which enables each of them to be more appropriately valued, especially those that do not need cooking. In particular, the by-products (head, skin, viscera, backbone) are valued more highly when they are raw instead of cooked.
- Reduction of manual labour by 30 %.

The method described is applicable to small specimens (between 1 and 10 kg, particularly between 1.5 and 5 kg) of any species of fish, particularly tuna.

Preferably, it starts with frozen fish, whereby the method includes a thawing step, prior to the rest of the steps.

### Detailed description of the invention

A detailed description of a preferred exemplary embodiment of a method for processing tuna is provided below, according to the present invention.

The method for processing tuna of the present invention, according to the present preferred exemplary embodiment, has a first step wherein, starting from frozen tunas, the tunas are sorted, selecting specimens weighing between 1.5 and 5 kg.

Subsequently, the selected tunas are subjected to a thawing step, in a thawing tunnel which is at a temperature between 10-20 °C, with thawing water at a temperature between 10-30 °C, preferably 16 °C. The thawing lasts between 2.5-4 hours, obtaining a temperature in the centre of the bone of between -2 and 0 °C.

Following the thawing, the tunas are deheaded, preferably in an automatic manner. Next, the tail and dorsal fins are removed and the tunas are gutted, all of this preferably manually.

Next, the tunas are subjected to a filleting step, using a cutting machine, which likewise separates the backbone, generating two fillets without a backbone.

The skin is then removed from the fillets, preferably through a machine wherein the fillet is adhered to a frozen drum of the machine, while, by means of a shell of the machine, the skin of the fillets is separated from the meat.

Once the skin has been removed, the dark meat is optionally separated from the centre of each fillet by means of cutting with a jet of water.

Finally, the rest of the fillet is cooked, without the skin, backbone or dark portion. The separation of the dark meat, alternatively, may not be carried out, or it may be carried out after the fish has been cooked.

The using yield of the tunas up to the moment before cooking is around 60 %.

The cooking step can be performed in water at a temperature between 60-100 °C, preferably around 97 °C, or in a steam tunnel, between 70-100 °C, preferably at 100 °C. The cooking step lasts between 10-20 minutes, which is significantly less than in the method explained in the background, since a large number of components have been removed prior to cooking, which further require a longer cooking time than the clean meat of the fillets. After coming out of cooking, the temperature in the centre of the fillets is between 60-65 °C, and the moisture is between 60-75 %, preferably around 69 %.

Finally, the fillets are cooled by means of a curtain of cold air, at a temperature of between 10-20 %, until the fish is brought to an environment between 10-35 °C, preferably 30 °C. Once cooled, a final reconditioning is optionally carried out which includes removal of bones, possible traces of skin and dark meat, prior to the final handling of the fillets.

The products which have been separated in the previous steps remain available for their individual valuation.

## Claims

1. A method for processing fish, comprising the steps of:
- selecting fish between 1 and 10 kg;
- deheading the fish;
- removing tail and dorsal fins of the fish;
- gutting the fish;
- filleting the fish, obtaining two fillets;
- removing backbone of the tunas; and
- removing the skin from the fish;
- separating dark meat from the centre of each fillet, and
- cooking the fish;
**characterised in that** the cooking step follows the steps of deheading, removing tail and dorsal fins, gutting, filleting, removing backbone and removing the skin.

2. The method for processing fish, according to claim 1, **characterised in that** the selected fish is in a frozen state, the method including a step of thawing the fish, prior to the rest of the steps.

3. The method for processing fish, according to any of claims 1-2, **characterised in that** the fish is tuna.

4. The method for processing fish, according to any of claims 1-3, **characterised in that** fish between 1.5 and 5 kg are selected in the selection step.

5. The method for processing fish, according to any of claims 1-4, **characterised in that** the cooking step is carried out, either in water or in a steam tunnel, for a duration of between 10-20 minutes, in order to obtain a temperature between 60-65 °C in the centre of the fillets.

6. The method for processing frozen tuna, according to any of claims 1-5, **characterised in that** it additionally comprises a reconditioning step, after the cooking step, and which includes at least one of: removal of bones, removal of traces of skin and removal of dark meat or traces of dark meat.

7. The method for processing frozen tuna, according to claim 6, **characterised in that** it comprises an additional step of cooling the tuna, after the cooking step and prior to the reconditioning step.

8. The method for processing frozen tuna, according to any of claims 1-7, **characterised in that** the thawing step is carried out in a thawing tunnel, at a temperature between 10-20 °C, with thawing water, and with a duration of between 2.5-4 hours, obtaining a temperature in the centre of the bone of between -2 and 0 °C.

9. The method for processing frozen tuna, according to any of claims 1-8, **characterised in that** the steps of filleting and removing the backbone take place in a cutting machine which further removes the backbone.

10. The method for processing frozen tuna, according to any of claims 1-9, **characterised in that** the step of removing the skin is carried out in a machine which contains a frozen drum wherein the fillet is adhered and a shell which separates the skin.

11. The method for processing frozen tuna, according to any of claims 1-10, **characterised in that** the step of separating the dark meat is carried out by means of cutting with a jet of water.
